**Europäisches Patentamt**

**European Patent Office**

**Office européen des brevets**

(19)

(11) Veröffentlichungsnummer: **0 137 340
B1**

(12) **EUROPÄISCHE PATENTSCHRIFT**

(45) Veröffentlichungstag der Patentschrift:
**24.02.88**

(21) Anmeldenummer: **84110920.0**

(22) Anmeldetag: **13.09.84**

(51) Int. Cl.⁴: **B 60 T 17/00**

(54) **Druckluftsystem eines Motorfahrzeugs.**

(30) Priorität: **24.09.83 DE 3334701**

(43) Veröffentlichungstag der Anmeldung:
**17.04.85 Patentblatt 85/16**

(45) Bekanntmachung des Hinweises auf die Patenterteilung:
**24.02.88 Patentblatt 88/8**

(84) Benannte Vertragsstaaten:
**AT DE FR GB IT NL SE**

(56) Entgegenhaltungen:
**DE-C-737 548
US-A-2 038 756
US-A-3 134 611**

(73) Patentinhaber: **Iveco Magirus Aktiengesellschaft,
Schillerstrasse 2, D-7900 Ulm/Donau (DE)**

(72) Erfinder: **Sauter, Josef, Dipl.- Ing., Ottostrasse 1,
D-7906 Blaustein (DE)**
Erfinder: **Bayer, Ulrich, Am Hägle 4, D-7901
Lonsee- Urspring (DE)**

(74) Vertreter: **Socha, Peter, Iveco Magirus AG
Postfach 2740 Schillerstrasse 2, D-7900 Ulm (DE)**

## Beschreibung

Die Erfindung betrifft ein bekanntes Druckluftsystem eines Motorfahrzeugs gemäß Oberbegriff des Anspruchs 1.

Motorfahrzeug-Druckluftsysteme, insbesondere Druckluftbremsanordnungen, verursachen auf der Luftabblasseite der betriebenen Druckluft-Arbeitsgeräte (Druckluftbremsen) sowie asch der zugehörigen Steuergeräte störende Geräusche. Zwecks Verringerung einer derartigen Geräuschemission werden an bekannten Fahrzeugen den Arbeits- und Steuergeräten jeweils adaptierte Geräuschdämpfer nachgeordnet, bevor die Abluft der Arbeitsgeräte an die Umgebung abgegeben wird. Adaptierte Geräuschdämpfer verlangen für jedes Arbeitsgeräte enormen baulichen Aufwand.

Aufgabe der Erfindung ist die Schaffung eines Druckluftsystems eines Motorfahrzeugs der eingangs genannten Art, bei dem die Abblasluftgeräuschemission der Druckluft-Arbeits- und/oder Steuergeräte mit Hilfe einfacher Mittel gering ist.

Gelöst wird die der Erfindung zugrundeliegende Aufgabe dadurch, daß die Arbeitsgeräte-und/oder Steuergeräte luftabblasseitig in einer Leitungsverbindung mit einer den Motor und/oder das Getriebe enthaltenden Kapsel stehen. Bei Motorfahrzeugen mit geringer Geräuschemission sind insbesondere Motor und/oder Getriebe zumeist schalldämmend verkapselt. Diese ohnehin vorhandene Kapsel bei derartigen Fahrzeugen wird erfindungsgemäß ausgenutzt, um abblasluftseitige Geräusche von Druckluft-Arbeits-und/ oder Steuergeräten zu minimieren. Die Kapsel fungiert mithin als Schalldämpfer, so daß auf adaptierte Geräuschdämpfer wie nach dem Stand der Technik verzichtet werden kann, was einer enormen baulichen Vereinfachung entspricht. Die Durchleitung der Abluft durch den Spalt zwischen Kapsel und Motor bzw. Getriebe oder dergleichen schafft eine zumindest zusätzliche Kühlung von Motor bzw. Getriebe. Von Vorteil gegenüber bekannten Dämpfern ist ferner die geringere Gefahr des Einfrierens bei einem Einsatz des Systems unter 0° C und insbesondere die Wartsugsfreiheit. Bekannte adaptierte Dämpfer sind nämlich nicht nur teuer, sondern auch sehr empfindlich gegenüber Schmutz und Feuchtigkeit und müssen öfters gereinigt werden, um ihrer Funktion voll zu genügen.

Zwar kennt man nach dem Stand der Technik (DE-PS 737 548) Druckmittelbremsen, bei denen das Druckmittel beim Lösen der Bremse nicht ins Freie entlassen, sondern im entspannten Zustand in einem Behälter gesammelt wird. Das vollständig entspannte Druckmittel wird jedoch vom Motor selbst angesaugt und ist ein Treibgas (nicht Druckluft), das für den Antrieb des Motors verwendet wird. Druckmittelsysteme der gattungsgemäßen Art sind grundsätzlich für Druckluft und größere Leistung assgelegt, was mit einer stärkeren Geräuschemission auf der Abblasluftseite der Arbeits-und/ oder Steuergeräte des Systems einhergeht. Nach dem vorgenannten Stand der Technik treten Geräuschemissionsprobleme der gattungsgemäßen Art von vorherin praktisch nicht auf.

Die Arbeitsgeräte können die Druckluftbremsen eines Fahrzeugs sein, wobei die Druckluftbremsen luftabblasseitig über eine Sammelleitung mit der Kapsel verbunden sind. Beispielsweise können dabei die vier Druckluftbremsen einer Doppelachse eines schweren Nutzfahrzeugs durch eine einzige baslich einfache Sammelleitung mit der Kapsel verbunden sein.

Als Steuergeräte können ein Druckregler sowie ein Handbremsventil vorgesehen sein, welche über eine Sammelleitung bzw. je eine Einzelleitung mit der Kapsel verbunden sind.

Die Einmündung der Sammelleitung bzw. Einzelleitungen in die Kapsel kann grundsätzlich an beliebiger Stelle erfolgen. Bevorzugt ist bei kühlluftdurchströmten Kapseln die Einmündung an deren Kühlluftsintrittsseite oder Abluftseite.

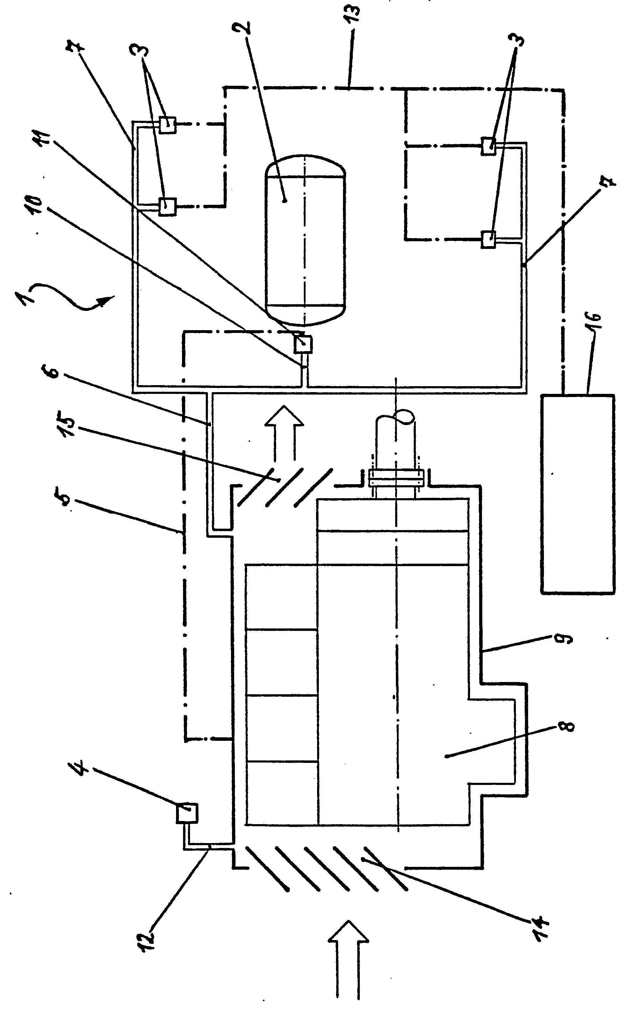

Die Erfindung wird nachfolgend anhand eines Ausführungsbeispiels unter Bezugnahme auf die aus einer einzigen Figur bestehende Zeichnung näher beschrieben.

In der Zeichnung ist in schematischer Weise ein Motorfahrzeug-Druckluftsystem in Verbindung mit einem gekapselten Motor bzw. Getriebe gezeigt.

Das Druckluftsystem 1 eines Motorfahrzeugs umfaßt einen Druckluftvorratsbehälter 2 mit unter Druck stehender Druckluft sowie diverse Druckluft-Arbeitsgeräte 3. Die Arbeitsgeräte 3 sind gemäß Ausführungsbeispiele die vier Druckluftbremsen einer Doppelachse eines schweren Nutzfahrzeugs. Ferner sind als Druckluft-Steuergeräte 11,4 ein Druckregler sowie ein Handbremsventil, welches im Bereich des Fahrerhauses des Nutzfahrzeugs angeordnet ist, vorgesehen.

Druckluftvorratsbehälter 2 sowie Arbeits- bzw. Steuergeräte 3,4,11 werden von einem (nicht veranschaulichten) Luftpresser oder Kompressor mit Druckluft versorgt.

Die Luftabblasseite der Druckluft-Arbeits- bzw. Steuergeräte 3,11 steht über eine Sammelleitung 6,7,10 abluftseitig mit einer Kapsel 9 in Verbindung, die umfangsmäßig den Motor 8 des Fahrzeugs aus Gründen der Verringerung der Motorgeräusche umschließt. Die Motorkapsel 9 schafft mit dem inneren Motor 8 einen Umfangsspalt, der mit Kühlluft in Richtung der Pfeile in der Zeichnung durchströmt wird, um gute Wärme- bzw. Kühlungsverhältnisse am Motor im Betrieb einzurichten. Insbesondere sind auf der Kühllufteintrittsseite 14 sowie auf der Abluftseite 15 der kühlluftdurchströmten Kapsel 9 in dieser Grillanordnungen in Schrägschlitzausbildung vorgesehen.

Die Einmündung der Einzelleitung 12 vom Steuergerät 4 zur Kapsel 9 erfolgt auf der Kühllufteintrittsseite 14.

Ersichtlich erfüllt somit die Kapsel 9 Schalldämpferfunktion für das Druckluftsystem 1 auf der Abluftseite der diversen Druckluft-Arbeits- bzw. Steuergeräte 3,4 und 11.

Die (strichpunktiert dargestellte) Sammelleitung 13 veranschaulicht die alternative Möglichkeit, daß die Abblasluft der Arbeitsgeräte 3 auch in eine vorhandene Getriebekapsel 16 oder eine ähnliche Kapsel bzw. Dämpfer geführt werden kann. Entsprechend kann über eine (strichpunktiert dargestellte) Einzelleitung 5 die Abblasluft des Steuergeräts 11 alternativ zur Kühllufteintrittsseite 14 der Motorkapsel 9 geführt werden.

**Patentansprüche**

1. Druckluftsystem (1) eines Motorfahrzeugs, insbesondere Druckluftbremsanordnung, mit wenigstens einem Druckluftvorratsbehälter (2) zur Versorgung von Arbeits-und/oder Steuergeräten (3,4,11) des Fahrzeugs mit Druckluft, und wobei der Motor und/oder das Getriebe des Farrzeungs schalldämmend verkapselt sind, dadurch gekennzeichnet, daß die Arbeits und/oder Steuergeräte (3,4,11) luftabblasseitig in einer Leitungsverbindung (6,7,10;5,12;13) mit einer den Motor (8) und/oder das Getriebe enthaltenden Kapsel (8,16) stehen.

2. Druckluftsystem nach Anspruch 1, dadurch gekennzeichnet, daß die Arbeitsgeräte (3) Druckluftbremsen eines Fahrzeugs sind, die luftabblasseitig über eine Sammelleitung (6,7;13) mit der Kapsel (9,16) verbunden sind.

3. Druckluftsystem nach Anspruch 1 oder 2, dadurch gekennzeichnet, daß als Steuergeräte (4,11) ein Druckregler sowie ein Handbremsventil vorgesehen sind, welche über eine Sammelleitung (6,7,10) bzw. je eine Einzelleitung (5,12) mit der Kapsel (9) verbunden sind.

4. Druckluftsystem nach den Ansprüchen 1 bis 3, dadurch gekennzeichnet, daß die Sammelleitungen (6,7,10;13) bzw. die Einzelleitungen (5,12) auf der Abluftseite (15) der kühlluftdurchströmten Kapsel (9,16) in letztere einmünden.

5. Druckluftsystem nach den Ansprüchen 1 bis 4, dadurch gekennzeichnet, daß die Sammelleitungen (6,7,10;13) bzw. die Einzelleitungen (5,12) auf der Kühllufteintrittsseite (14) der kühlluftdurchströmten Kapsel (9,16) in letztere einmünden.

**Claims**

1. A compressed-air system (1) for a motor vehicle, especially an air-brake assembly, in which the system comprises at least one compressed-air receiver (2) for supplying compressed air to operating and/or control appliances (3, 4, 11) of the vehicle, and in which the vehicle's engine and/or its gear train are sound-absorbingly encased, characterized in that the air-exhaust openings of the operating and/or control appliances (3, 4, 11) are connected by ducts (6, 7, 10; 5, 12; 13) to a or a respective casing (9, 16) housing the engine (8) and/or the gear train.

2. A compressed-air system according to claim 1, characterized in that the operating appliances (3) are compressed-air brakes of the vehicle, and in that the brakes' exhaust openings are connected by a common duct (6, 7 and/or 13) to the casing (9 and/or 16).

3. A compressed-air system according to claim 1 or claim 2, characterized in that the control appliances (4, 11) are a pressure regulator and a hand-brake valve both of which are connected by a common duct (6, 7, 10) or by respective individual ducts (5, 12) to the casing (9).

4. A compressed-air system according to any of the preceding claims, characterized in that cooling air is arranged to flow through the or each casing (9, 16), and in that the common ducts (6, 7, 10; 13) and the individual ducts (5, 12) respectively enter the respective casing (9, 16) in the vicinity of the casing's spent cooling-air outlet (15).

5. A compressed-air system according to any of the preceding claims, characterized in that cooling air is arranged to flow through the or each casing (9, 16), and in that the common ducts (6, 7, 10; 13) and the individual ducts (5, 12) respectively enter the respective casing (9, 16) in the vicinity of the casing's cooling-air inlet (14).

**Revendications**

1. Système à air comprimé (1) d'un véhicule à moteur, notamment dispositif de freinage à air comprimé, comportant au moins un réservoir de stockage (2) d'air comprimé pour alimenter en air comprimé des appareils de travail et/ou de commande (3, 4, 11) du véhicule, le moteur et/ou le mécanisme de transmission du véhicule étant enfermés dans une capsule insonorisante, système à air comprimé caractérisé en ce que les appareils de travail et/ou de commande (3, 4, 11) sont, du côté de l'expulsion d'air, en liaison par conduites (6, 8, 10; 5, 12; 13) avec une capsule (9, 16) contenant le moteur (8) et/ou le mécanisme de transmission.

2. Système à air comprimé selon la revendication 1, caractérisé en ce que les appareils de travail (3) sont des freins à air comprimé d'un véhicule, qui sont, du côté de l'expulsion d'air, reliés à la coque (9, 16) par l'intermédiaire d'une conduite collectrice (6, 7; 13).

3. Système à air comprimé selon l'une quelconque des revendications 1 et 2, caractérisé en ce que comme appareils de commande (4, 11) sont prévus un régulateur de pression ainsi qu'une vanne de freinage à main, qui sont reliés à la coque (9) par l'intermédiaire d'une conduite collectrice (6, 7, 10) ou par une conduite individuelle (5, 12) pour chacun de ces appareils.

4. Système à air comprimé selon une quelconque des revendications 1 à 3, caractérisé en ce que les conduites collectrices (6, 7, 10; 13) ou les conduites individuelles (5, 12) débouchent, dans la capsule (9, 16) parcourue par de l'air froid, sur le côté (15) de la sortie d'air de cette coque.

5. Système à air comprimé selon une quelconque des revendications 1 à 4, caractérisé en ce que les conduites collectrices (6, 7, 10; 13) ou les conduites individuelles (5, 12) débouchent, dans la capsule (9, 16) parcourue par de l'air froid, sur le côté (14) de l'entrée d'air froid de cette coque.

0 137 340